# EUROPEAN PATENT SPECIFICATION

(11) **EP 1 642 100 B1**
(45) Date of publication and mention of the grant of the patent: **26.08.2009**
(21) Application number: 04743226.5
(22) Date of filing: 02.07.2004
(51) Int. Cl.: G01K 5/56, G01J 5/44

(54) **THERMAL DETECTOR**
THERMISCHER DETEKTOR
DETECTEUR THERMIQUE

(30) Priority: 03.07.2003 GB 0315526
(43) Date of publication of application: 05.04.2006
(73) Proprietor: QinetiQ Limited, London SW1 6PD (GB)
(72) Inventor: COMBES, David J., c/o QinetiQ Limited, Malvern, Worcestershire WR14 3PS (GB); BRUNSON, Kevin M., c/o QinetiQ Limited, Malvern, Wocestershire WR14 3PS (GB); MCNIE, Mark E., c/o QinetiQ Limited, Malvern, Worcestershire WR14 3PS (GB); DAVIES, Rhodri R., c/o QinetiQ Limited, Malvern, Wocestershire WR14 3PS (GB); TODD, Michael A., QinetiQ Limited, Malvern, Worcestershire WR14 3PS (GB); DONOHUE, Paul P., QinetiQ Limited, Malvern, Worcestershire WR14 3PS (GB); ANTHONY, Carl J. Dept. of Mechanical Engineering, Edgbaston, Birmingham B15 2TT (GB); LEWIS, Keith L., QinetiQ Limited, Malvern, Worcestershire WR14 3PS (GB)
(74) Representative: Clarke, Alan
(86) International application number: PCT/GB2004/002880
(87) International publication number: WO 2005/003704

(56) References cited:
- JP-A- 7 083 756
- BURNS D W: "RESONANT MICROBREAM SENSORS" SCIENTIFIC HONEYWELLER, HONEYWELL'S CORPORATE. MINNEAPOLIS, US, 1996, pages 96-108, XP000678075 ISSN: 0196-8440
- BAGLIO S ET AL: "Modeling and design of novel photo-thermo-mechanical microactuators" SENSORS AND ACTUATORS A, ELSEVIER SEQUOIA S.A., LAUSANNE, CH, vol. 101, no. 1-2, 30 September 2002 (2002-09-30), pages 185-193, XP004380168 ISSN: 0924-4247
- CORBEIL J L ET AL: "Self-leveling uncooled microcantilever thermal detector" APPLIED PHYSICS LETTERS, AMERICAN INSTITUTE OF PHYSICS. NEW YORK, US, vol. 81, no. 7, 12 August 2002 (2002-08-12), pages 1306-1308, XP012033261 ISSN: 0003-6951
- ZHAO Y ET AL: "OPTOMECHANICAL UNCOOLED INFRARED IMAGING SYSTEM: DESIGN, MICROFABRICATION, AND PERFORMANCE" JOURNAL OF MICROELECTROMECHANICAL SYSTEMS, IEEE INC. NEW YORK, US, vol. 11, no. 2, April 2002 (2002-04), pages 136-146, XP001125207 ISSN: 1057-7157
- STURM, REAVES: "Silicon temperature measurement by infrared absorption: Fundamental processes and doping effects" IEEE TRANSACTIONS ON ELECTRON DEVICES, vol. 39, no. 1, 1992, pages 81-88, XP002299734

## Description

The present invention relates to an uncooled thermal detector and in particular to a radiant thermal energy detector incorporating a micro-electromechanical system (MEMS) resonant structure.

All objects emit radiation with an intensity and wavelength distribution that is determined by their surface temperature and character. For objects (such as human bodies) around room temperature the emitted energy peaks in the infra-red. As the infra-red radiation is related to the temperature of an object, it is often referred to as thermal infrared radiation.

A number of types of thermal detector (sometimes called bolometers or infra-red detectors) are known. Typical detectors comprise a number of detection element (or pixels) each comprising a thin layer of material having properties that change with temperature and a radiation absorption layer. Any infra-red radiation absorbed by the absorption layer causes heating of the temperature sensitive layer. In some cases, such as a titanium bolometer, a single layer may perform both functions. It is common for the associated change in material properties to be measured by monitoring changes in the resistance or capacitance of a pixel.

A typical temperature sensitive material used in a resistive bolometer exhibits resistance changes of around 1-2% per Kelvin. Typical performance for a commercially available Vanadium Oxide resistive bolometer is of the order of 60mK NETD (Noise Equivalent Temperature Difference) in the scene at around 30Hz frame rate with a pixel pitch of approximately 50µm and F1 optics: The performance of resistive thermal detectors is generally limited by the detector Johnson noise, and the subsequent signal to noise ratio associated with the detector and read-out circuit. Research has thus been undertaken in recent years directed to developing materials which exhibit larger changes in material properties with temperature.

One known technique for increasing thermal detector sensitivity (i.e. increasing the change in material properties for a given temperature variation) is to use colossal magneto-resistive or CMR materials, such as LCMO (La_{0.7}Ca_{0.3}MnO₃) in which a rapid phase change leads to large changes in properties. Such an approach has several drawbacks. CMR materials tend to be incompatible with standard CMOS processing. This makes integration of the detector and associated electronic read-out circuitry more difficult and relying on a sudden phase change limits the flexibility of the resulting detector. At operating temperatures away from the phase change the material is insensitive to changes in temperature, and the temperature range over which the phase change occurs is a property of the material, and as such cannot easily be tailored to best meet the requirements of a detector.

Various alternative thermal detector arrangements have also been described in the prior art. For example, it is known to exploit a thermo-mechanical effect to change the capacitance of a pixel. US6392233 describes a thermal detector comprising bimorph cantilevers which change the position of a pixel relative to the substrate with temperature thereby altering the capacitance of the pixel. The measurement of the resulting capacitance is at base band (DC) and performance is therefore limited by subsequent 1/f noise in CMOS circuitry.

JP-07-083756 describes an alternative type of infrared detector that comprises a mechanical oscillatory beam that is arranged to absorb infrared radiation. The oscillatory beam is anchored at both ends to a fixed substrate and any absorbed radiation increases the stress within the beam thereby altering its resonant frequency. To maximise thermal expansion of the beam relative to the surrounding material, each end of the beam is attached to the substrate via thermally insulating regions and a mask is also provided so that incident infrared radiation falls only on the oscillatory beam. A device of this type has several drawbacks. For example, it is complex to manufacture. In particular, thermal isolation of the oscillatory beam is difficult to achieve resulting in large temperature gradients that greatly reduce device sensitivity.

Burns, DW, "Resonant Microbeam Sensors", Scientific Honeyweller 1996, pp96-108 describes the design and application of microbeam resonator systems to the measurement of various properties, including temperature.

Baglio et al, "modeling and design of novel photo-thermo-mechanical microactuators", Elsevier Sequoia SA, Lausanne, CH. Sensors and Actuators A, Vol 101, No. 1-2, 30th Sept. 2002, pp 185-193 describes a system wherein lenses are used to beat a non-resonant actuator.

Corbeil, JL et al, "Selt-leveling uncooled microcantilever thermal detector", Applied Physics Letters, Americal Institute of Physics, Vol 81, No 7, 12th August 2002 pp1306-1308 discloses a non resonant cantilever system utilising a bimetallic cantilever suitable for the detection of IR radiation.

Zhao, Y et al, "Optomechanical uncooled IR Imaging System: Design, Microfabrication and Performance", Journal of Microelecromechanical Systems, IEEE Inc, Vol 11 No. 2, April 2002, pp 136-146, describes a focal plane array formed from a set of no resonant bimetallic cantilevers.

It is an object of the present invention to mitigate at least some of the aforementioned disadvantages of known infra-red detector devices.

According to a aspect of the present invention, a device for detecting infrared radiation comprises a resonator element fixably attached to a supporting frame at two or more points, the resonator element having a mechanical resonance, and the device including means for measuring resonant properties of the resonator element, characterised in that the supporting frame is arranged to absorb infrared radiation received by the device thereby altering a resonant property of the resonator element, and wherein the supporting frame is mounted on a substrate via a mounting means, the mounting arrangement providing thermal isolation between the substrate and the supporting frame.

A thermal detector device is thus provided in which a resonator element (e.g. a resonant beam etc) is attached to a supporting frame. As described in more detail below, the supporting frame is attached to, or formed from, a substrate. In use, incident infrared radiation is absorbed by, and thus heats, the supporting frame. Thermal expansion arising from the heat generated in the supporting frame alters the stress that is applied to the resonator element thus causing a detectable change in a resonant property (e.g. the frequency or mode of resonance) of the resonator element. In use, measurement of an appropriate resonant property of the resonator element enables the intensity or infrared radiation incident on the device to be determined.

The supporting frame is preferably in good thermal contact with the resonator element so that the resonator element and the supporting frame are maintained in approximate thermal equilibrium during use. Furthermore, the resonator element and the supporting advantageously have different coefficients of thermal expansion. On heating, differential expansion of the supporting frame and resonator element cause a large change in the stress that is applied to the resonator element thereby further improving device sensitivity. The supporting frame is thermally isolated from the substrate - for example, where suspension legs are provided to isolate the frame from the substrate, any temperature differential is predominantly confined to the legs.

A thermal detector of the present invention has several advantages over prior art resistive bolometer devices of the type described above. For example, a device of the present invention can be arranged to have a high dynamic range and/or sensitivity, it circumvents the noise issues associated with taking base-band measurements, and it can be readily post-processed onto CMOS. The dynamic range and sensitivity of a device of the present invention may also be controlled by appropriate design and fabrication of the resonator element and/or supporting frame. This should be contrasted to prior art resistive bolometer devices where the type of material deposited would have to be altered in order to significantly alter the dynamic range and/or sensitivity of the device.

Furthermore, and unlike prior art resistive bolometer devices, a device of the present invention is not reliant on the measurement of the relative resistance or capacitance of a layer of temperature sensitive material with temperature. Instead, the output is derived from measurement of the change imparted to the resonant mode of a resonator element when a temperature variation is induced therein by the absorption of infra-red radiation by the device. Measuring a change in the resonant mode (e.g. measuring a change in resonant frequency) is typically more accurate than making relative resistance or capacitance measurements.

Devices of the present invention are also advantageous over thermal detectors of the type described in JP-07-083756. In particular, a device of the type described in JP-07-083756 is arranged so that only the resonant beam is heated by incident infrared radiation received by the device. Such a prior art device also employs a rather complex resonant beam structure that includes thermally insulating regions to prevent heat transfer to the surrounding material. These thermally insulating regions of the resonant beam are difficult to fabricate and can also lead to increased levels of fatigue induced device failure. Furthermore, the level of thermal insulation provided is somewhat limited and causes large thermal gradients across the resonant beam that result in a complex relationship between the exhibited resonant property and the temperature of the resonant beam thereby degrading measurement accuracy.

In contrast, the present invention does not suffer from the above mentioned drawbacks that are associated with devices of the type described in JP-07-083756. In particular, the present invention does not require the resonator element to comprise integral thermally insulating regions. In fact, it is advantageous in a device of the present invention to provide good thermal contact between the resonator element and the supporting frame in order to minimise thermal gradients. In this manner, the supporting frame and the resonator element are heated to the same temperature by received radiation even if they have different infrared absorption properties. Furthermore, a device of the present invention offers a much higher fill factor than a device of the type described in JP-07-083756.

It should be noted that reducing thermal conductance between the supporting frame and the underlying substrate of a device (for example, by using long, narrow and thin suspensions of an appropriate material) of the present invention will improve detection efficiency as well as minimising thermal gradients within the frame and resonator element. It is also preferred that the thermal mass of the supporting frame is sufficiently small so that heating induced by the thermal radiation will alter the temperature of the supporting frame in the timescales in which measurements are acquired. It is therefore advantageous for the supporting frame to comprise a suspended portion spaced apart from the underlying substrate, the resonator element being fixably attached to the suspended portion. In other words, a thermal detector of the present invention comprises a substrate and an oscillatory member, the oscillatory member being carried by a suspended portion spaced apart from the substrate wherein the suspended portion is arranged to absorb infrared radiation.

Locating the resonator element on a suspended portion of the supporting frame provides good thermal isolation from the underlying substrate of the device. The precise amount of thermal isolation required to provide a device that can operate at a certain frame rate depends on the temperature of operation, the thermal capacity of the suspended portion and the required sensor performance. A skilled person would, using the teachings contained herein, be able to design a variety of devices in accordance with the present invention that would be suitable for numerous different applications.

The thermal mass of the suspended portion of a device of the present invention can be readily selected as required for the particular application. For typical applications, performance would be maximised by minimising the thermal mass of the suspended portion. The temperature of the suspended portion and the resonator element would then approach thermal equilibrium in the frame time of a typical detector and the temperature change would be maximised for a given amount of incoming radiation.

Advantageously, the suspended portion is spaced apart from the underlying substrate by a distance that is sufficient to form a resonant absorption structure for radiation having wavelengths within an infrared band of interest. For example, at a single frequency, the suspended portion may be spaced apart from the substrate by a distance equal to a multiple of one quarter of the wavelength of the incident radiation. A reflective element, that may be formed in the same layer as the drive electrode, may be provided on the underlying substrate. In this manner, a resonant structure is formed by the suspended portion which maximises absorption of infrared radiation in the suspended portion of the device. It should be noted that forming a resonant cavity of this type can increase the absorption efficiency of the device from around 50% to more than 90%.

Conveniently, the suspended portion is suspended from the underlying substrate on at least one leg. Preferably, two legs or more than two legs are provided to support the suspended portion. Ideally, the legs may be designed to provide a high degree of thermal isolation between the suspended frame containing the resonator element and the substrate. The legs (which can also be termed suspension elements) may also be used to mechanically isolate the resonant element from the underlying substrate and/or package; i.e. the legs may also reduce the stress imparted to the supporting frame by the substrate. The legs may advantageously include conductive material to provide an electrical connection between the resonator element and the underlying substrate.

The supporting frame (including any suspended portion thereof) may also include an absorber layer or layers (e.g. a metal absorber layer of matched impedance to free space, such as titanium with a sheet resistance of 377 Ohms/square) designed to maximise the amount of incoming radiant energy absorbed as heat into the detector. The absorber layer may perform both absorber and electrical connection roles in combination.

The absorber layer may be the, or an, outermost layer of the supporting frame. Alternatively, the supporting frame may be formed as a multiple layer stack which includes an absorber layer. For example, the supporting frame could comprise a dielectric-metal-dielectric stack. Locating the absorber layer in the centre of such a stack has the advantage of reducing bi-morph effects; i.e. it ensures heating of the absorber layer does not cause the supporting frame to bend or buckle due to differences in the thermal expansion coefficients of the various layers from which it is formed.

Advantageously, infrared radiation absorbed by the device alters the resonant frequency of the resonator element. Measurement of the resonant frequency of the resonator element can then provide an indication of the temperature of the supporting frame. Alternatively, the resonator element may conveniently be arranged such that mode shape is changed with temperature. This may be achieved by preferential heating of part of the resonator element or supporting frame. Changing the mode shapes of a well balanced resonator in this way leads to changes in the mechanical quality factor, Q, of the resonator modes which may be monitored to provide an indication of temperature.

The device preferably comprises oscillation means to drive the resonator element into resonance. In particular, an electrical oscillator arrangement can be provided in which the mechanical resonator element acts as the primary component determining frequency. The oscillation drive means may electrostatically drive the resonator element; for example, it may comprise an electrode on said underlying substrate to electrostatically drive the resonator element. The oscillation drive means may alternatively or additionally comprise a piezoelectric actuation means on the resonator element. Monitoring the frequency of the resulting electrical oscillator allows the temperature of the pixel to be inferred. A skilled person would also be aware of various alternative driving techniques that could be employed.

In the case of an electrostatic oscillation means the resonator element may advantageously comprise a layer of conducting or semiconductor material, such as polysilicon or aluminium. Alternatively it could comprise a combination of conducting or semiconductor material with a dielectric layer. In the case of a piezoelectric drive means the resonator element may comprise a composite of conductors, semiconductors, dielectrics and piezoelectric materials.

Advantageously, the resonator element is fixably attached to the supporting frame at two points or at more then two points. Thermal expansion of the supporting frame and/or resonator element will then alter the stress applied to the resonator element.

Advantageously, the resonator element comprises at least one flexible elongate beam. The elongate beam may be arranged to resonate in the plane or out of the plane of the device as required. The supporting frame may conveniently comprise a layer of metal, semiconductor or dielectric material having an aperture defined therein. In an advantageous embodiment, the elongate flexible beam may be arranged to lie across the aperture defined in the layer of material. The elongate flexible beam may also be fixed to the layer defining the aperture at both ends and may be formed from or comprise a conductive material (e.g. a metal) or a semiconductor material. If electrostatic oscillation means are provided, the flexible beam can be driven to resonate by an electrode fixed on the substrate below the suspended beam.

Furthermore, the flexible beam and/or the layer in which an aperture is formed may conveniently comprise a phase transition material, such as a shape memory alloy. Such phase transition materials exhibit a transition at a certain temperature that results in a large change in the associated mechanical properties. Forming the flexible beam and/or the layer in which an aperture from such a material, especially a material in which the phase transition occurs at a temperature within the temperature range of device operation, can further increase the change in stress induced in the resonator element for a given change in temperature.

Conveniently, a plurality of detection elements are provided, each detection element comprising a resonator element fixably attached to a supporting frame. In this manner, thermal isolation between the detection elements (or pixels) is achieved. For example, a linear or two dimensional array of detection elements may advantageously be provided. The two dimensional array may comprise at least 16 by 16, 32 by 32, 64 by 64, 128 by 128, 256 by 256, 640 by 480, etc detection elements as required. A pixel pitch of less than 100µm can be readily provided and a pixel pitch within the range of 30-50µm can also be achieved making the device suitable for large area array imaging applications. An NETD of less than 50mK can be obtained, and levels less than 10mK are also achievable.

It should be noted that the device may be arranged to operate in a continuous detection mode (often termed "staring" mode operation). Alternatively, a differential detection type of arrangement could be implemented in which a shutter is provided to periodically mask some or all of the detection elements of the device from incident radiation. Furthermore, a mask could additionally or alternatively be provided to prevent infrared radiation reaching one or more detection elements. The output of the masked or "dark" pixels could then be used as a control or reference value. One method of operation would be to mask alternate columns of pixels in an array such that in alternate frames, each pixel changes from masked to unmasked or vice versa. The precise manner in which these modes of operation could be implemented would be well known to a person skilled in the art.

Advantageously, each detection element is arranged to output an electrical signal that is indicative of the resonant frequency of the associated resonator element. For example, further electronics may be included within the pixel to provide a base band output from each detector element that is indicative of the resonant frequency (and hence the temperature) of the resonator element.

For ease of manufacture, it is preferred that the resonator element is formed using one or more micro-fabrication process steps such as photolithography, deposition and dry etching in a micro-electromechanical system (MEMS) process flow. A thermal detector of the present invention can advantageously be manufactured using many of the numerous MEMS fabrication techniques that are known to those skilled in the art. For example, metal-nitride sacrificial surface micromachining as described by R R Davies et al, "Control of stress in a metal-nitride-metal sandwich for CMOS-compatible surface micromachining", MRS-782, Materials Research Society Fall Meeting, Boston (USA), Dec. 2003, pp. 401-406 and R A Noble et al, "A Cost-effective and Manufacturable Route to the Fabrication of High-Density 2D Micromachined Ultrasonic Transducer Arrays and (CMOS) Signal Conditioning Electronics on the same Silicon Substrate", Proc. IEEE Ultrasonic Symposium, Atlanta (USA), Oct 2001, pp.941-944 are one example of a technique suitable for manufacturing such a detector. Surface micromachining techniques of this kind provide significant advantages in terms of ease of device fabrication compared with bulk machining methods of the type described in JP-07-083756.

Conveniently, the device further comprises readout electronics. The readout circuitry may be hybrid attached to the device or the device may be fabricated monolithically on the same substrate (e.g. silicon) in which readout circuitry (e.g. CMOS) has already been formed. Preferably, the detector pixel is arranged so that it is fabricated above the associated readout circuitry (e.g. vertically integrated) thereby enabling dense large area arrays to be formed without being limited by interconnect density. The ability to form both readout circuitry and the associated MEMS structure using a single process is advantageous from both a cost and complexity perspective; for example, the detector device chip could be fabricated using only CMOS compatible technology.

The present invention thus provides a thermal detector comprising one or more detection elements for receiving infra-red radiation, each detection element comprising a temperature sensing region located on a suspended portion spaced apart from the underlying substrate of the thermal detector, the temperature sensing region comprises a resonator element having a resonant property that varies with temperature; the suspended portion being arranged to absorb infrared radiation received by the device.

According to a further aspect of the invention, a thermal imaging camera incorporates a thermal detector according to the first aspect of the invention. The thermal imaging camera would also comprise a housing, infra-red optics etc.

The invention will now be described, by way of example only, with reference to the accompanying drawings in which;
Figure 1 shows a typical response curve of a prior art infra-red detector incorporating Titanium material,
Figure 2 shown, a typical response curve of a prior art infra-red detector incorporating CMR material,
Figure 3 shows a MEMS resonator infra-red pixel of the present invention,
Figure 4 shows a schematic sectional view of a pixel according to the invention,
Figure 5 shows a schematic plan view of a pixel according to the invention,
Figure 6 shows three snap shot views of a MEMS resonator of the present invention during the oscillation process,
Figure 7 shows the calculated temperature versus resonant frequency response of a MEMS resonator of the present invention,
Figure 8 shows the calculated frequency sensitivity versus temperature response of a MEMS resonator of the present invention,
Figure 9 shows an example of a mask design for a two-by-two detector array of the present invention,
Figure 10 is a schematic illustration of a cross-section through another device of the present invention,
Figure 11 is a plan view of the device shown in figure 10,
Figure 12 is an interferometric image of a device fabricated to the design of figures 10 and 11,
Figure 13 is a schematic illustration of a further device of the present invention, and
Figure 14 shows a thermal imaging camera incorporating a detector of the present invention.

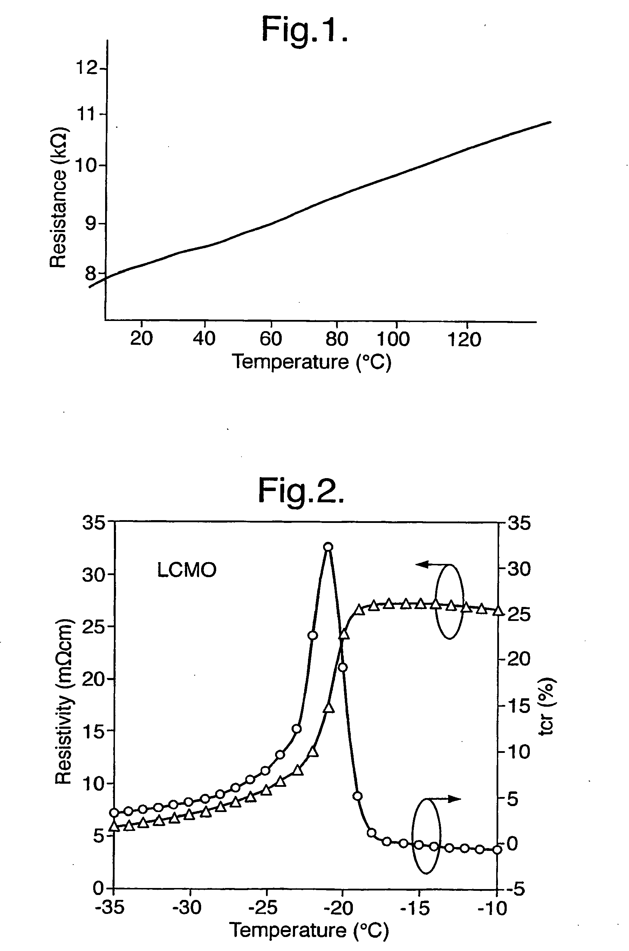

As described above, a number of different types of thermal detector are known. Referring to figure 1, a response curve is shown that illustrates the electrical resistance of a thin titanium layer with temperature as used in a prior art detector of the type described by Lee et al in "High fill-factor infrared bolometer using micromachined multilevel electro-thermal structures", IEEE Trans. ED-46.7, 1999, pp. 1489-1491. In such bolometer-type sensors (typically measuring a change in resistance or capacitance), temperature sensitivity is typically limited to around 0.1% to 1% per Kelvin.

Referring to figure 2, an illustration of the response curve of a prior art detector material of a CMR type is given. It can be seen that the variation in material properties is very marked over a small operational range, with sensitivities in excess of 30% per Kelvin. Away from this narrow temperature range, temperature sensitivity is less marked. It can be seen that the temperature region over which the material is most sensitive is not commensurate with typical ambient conditions.

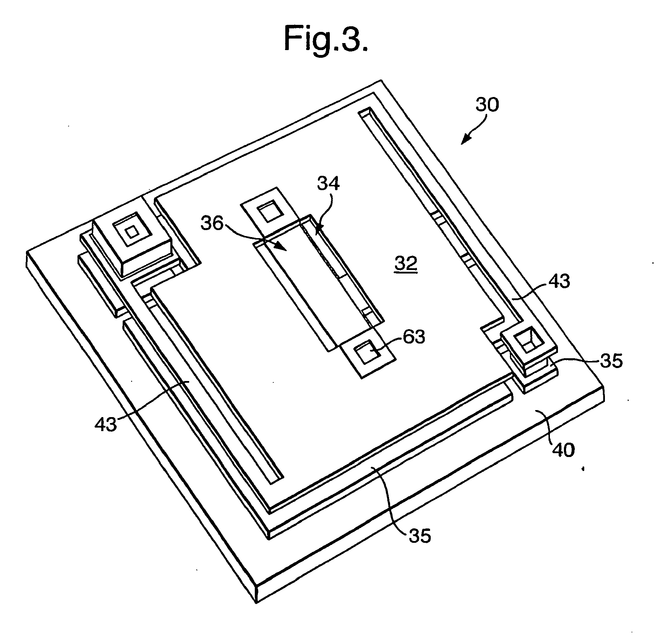

Referring to figure 3, an infra-red detector pixel 30 of the present invention is shown. The pixel 30 includes a suspended portion 32 comprising a dielectric layer in combination with an absorber layer, in which a hole 34 is formed. An elongate metallic resonator beam 36 is placed across the hole 34. Via contact holes are cut to electrically connect the resonator beam 36 with the fixed metal layer 35 via the legs 43. In order to maximise thermal isolation between the suspended portion 32 and the substrate 40, the legs 43 are long and thin.

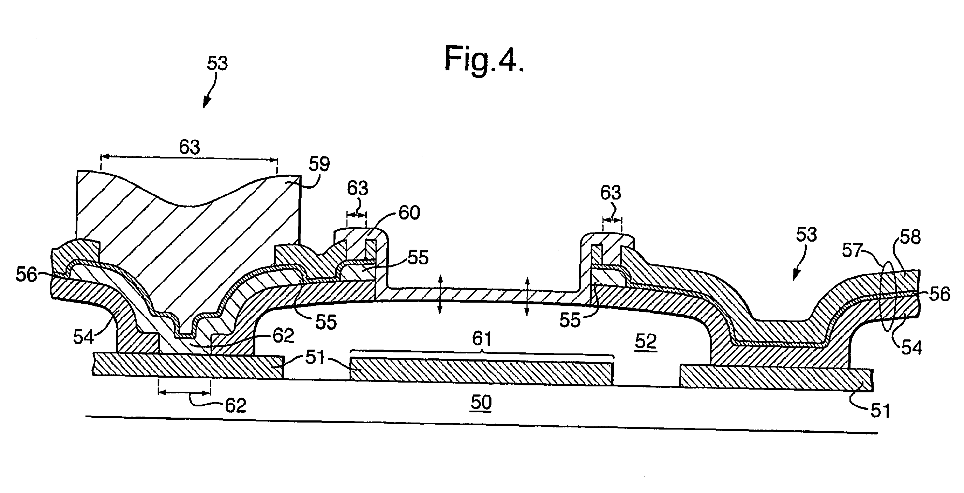

Referring now to figures 4, 5 and 6 a process by which a detector according to the invention may be realised is outlined. The process comprises the steps outlined below:
(a) All layers are preferably fabricated on silicon, preferably supplied from a qualified major wafer supplier. Silicon or Silicon-on-Insulator (SOI) wafers would be particularly suitable as they could also include monolithic electronic components; for example integrated circuit technology such as CMOS, Bi-CMOS, bipolar, etc. However, a skilled person would appreciate that other semiconductor materials (e.g. GaAs, InSb, etc) could be used. Similarly, the semiconductor material may be supported on a layer of Quartz, glass, sapphire, etc.
(b) An electrical isolation layer of silicon dioxide film 50 is grown or deposited on the wafer (i.e. the substrate 40). It should be noted that the layer of silicon dioxide film 50 would most likely be formed by the wafer supplier and provided with the wafer. Contact holes may be etched (e.g. by reactive ion etching, RIE) in this layer to enable a bulk substrate contact to be made in subsequent process steps.
(c) A metal film 51 (METAL0) is deposited next (e.g. by sputter deposition), and is then patterned using photolithography. The metal film 51 could also be the top metal layer from a preceding IC process - for example, where the MEMS sensor elements are post-processed on top of substrates containing CMOS integrated circuits. In this process, the wafers are coated with photoresist, the photoresist is exposed with the appropriate mask, and the exposed photoresist is developed to create the desired etch mask for subsequent pattern transfer into the underlying layer. After patterning the photoresist, the underlying layer is etched (e.g. by RIE). This sequence of lithography, deposition and etch is repeated to build up a "two and a half dimensional" structure on the surface of the wafer. This fixed metal layer 51 forms electrodes, interconnects and bond pads as well as providing a reflective layer to incident radiation.
(d) A lower nitride layer (not shown in figure 4) may be deposited over the metal layer 51 at this stage. The nitride layer is selected to have a high refractive index at optical wavelengths and a high dielectric constant. As outlined in more detail below, this layer is not essential but provides improved performance by both increasing the effective optical path length and decreasing the effective electrical gap between the suspended resonator element and the substrate.
(e) A sacrificial layer 52 (such as polyamide, amorphous silicon etc) is then deposited (e.g. by resist spinning). This layer may provide a degree of planarisation, and is removed in a release process (such as a RIE release or wet etch release process) at the end of the fabrication process to free the suspended structural layers.
(f) Contact holes 53 are etched in the sacrificial layer, to enable electrical and mechanical connections between the moving mechanical layers and the fixed metal layer.
(g) A dielectric layer 54 (DIEL1), preferably of low thermal expansion co-efficient, is deposited (e.g. PECVD Silicon Nitride) and patterned (e.g. by RIE). VIA1, 62 is cut in the layer to enable subsequent layers to contact METAL0, 51. This layer provides the bottom of a stress balanced, three layer mechanical composite for the suspended pixel. The layer is also preferably of low thermal conductivity and thermal mass.
(h) A thin metal layer 55 (METAL1) is deposited and patterned (e.g. sputtered Al, RIE). This layer is designed to ensure good contact between METAL3 and METAL0 It is convenient if the layer is insensitive to the process used to etch DIEL2.
(i) A thin absorber layer 56 (ABS) is deposited and patterned (e.g. sputtered Ti, RIE). This layer must be of low thermal conductivity, and is designed to both absorb incoming radiation and provide for electrical connection between METAL3 (60) and METAL0 (51) (via METAL1, 55). This layer forms the central layer of the three layer structural composite 57.
(j) A dielectric layer 58 (DIEL2) of similar material specifications to DIEL1 (54) is deposited and patterned. Although the dielectric layers DIEL 1 and DIEL 2 could be formed of the same material, the properties of each layer could alternatively be tailored in order to "tune" the stress within the layer structure to ensure no unwanted buckling or bending of the structure occurs. VIA2 (63) is cut in the layer to enable subsequent layers to contact ABS (56). This is the final layer of the three layer structural composite, and is necessary to balance any stress from DIEL1 (54).
(k) A metal 59 (METAL2) is deposited and patterned (e.g. sputtered Al, RIE). This layer is to ensure good contact down the anchor contact holes to METAL0.
(l) A metal 60 (METAL3) is deposited and patterned (e.g. sputtered A1, RIE). This metal is preferably of high thermal expansion co-efficient. This layer forms the mechanical resonator element 36 shown when released in figure 3.
(m) The sacrificial layer 52 is removed in a release process (such as an RIE release), to free the suspended mechanical layers.

It should be noted that the above example shows a device according to the invention with the main pixel structure formed of a material with low thermal expansion co-efficient, with the resonator being formed of a material with high thermal expansion co-efficient. A device according to the invention could function equally well the other way around i.e. with the main pixel structure formed from a material with high thermal expansion co-efficient and the resonator formed from a material with low thermal expansion co-efficient.

In the example given above, the dielectric layers DIEL1 and DIEL2 (54, 58) may comprise silicon nitride. METAL3 (60) may comprise aluminium. The thermal expansion co-efficients of silicon nitride and aluminium are approximately 2.5ppm/K and 24ppm/K respectively. Heat absorbed into the suspended portion, including the resonator will therefore lead to a mismatched expansion which in turn leads to a change in the tension in the beam. Changes in tension will lead to a change in the resonant frequency of the beam.

In order to maximise the temperature rise at the pixel it is necessary to minimise thermal conductance. This is achieved using the silicon nitride legs 43 to reduce the transfer of thermal energy from the suspended portion of the device to the substrate and also by operating the device in a vacuum to minimise heat loss through the atmosphere. Furthermore, the thermal time constant of the suspended portion of the pixel is preferably made small enough to approach equilibrium in the array read time.

It can be seen clearly from figure 4 that the process described allows for electrical connections via the fixed metal layer METAL0 (51) to the resonator and to a drive electrode 61 (formed from the metal layer 51) spaced on the substrate below the resonator.

In order to drive the beam into resonance, a varying electric field is applied between the resonator beam 36 (i.e. via the electrical connection provided by the METAL1 60 and ABS 56 layers down at least one of the legs 43) and a base electrode 61 that is located on the substrate 40 directly below the resonator beam 36. The resonator 36 and drive electrode 61 form part of an electrical oscillator (not shown) with the mechanical resonator as the primary component determining frequency. Preferably the further electrical components comprising the electrical oscillator are located within the area of the pixel. Further electronics are advantageously located in the pixel to provide a base band output from the pixel dependant on the frequency of the electrical oscillator.

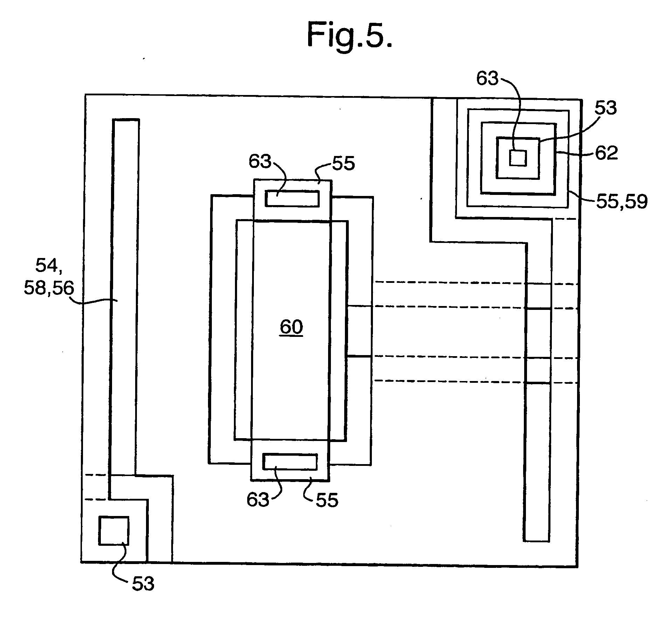

Referring to figure 5 the outline patterns used to define the layers, vias and contact holes given in the above example process are illustrated.

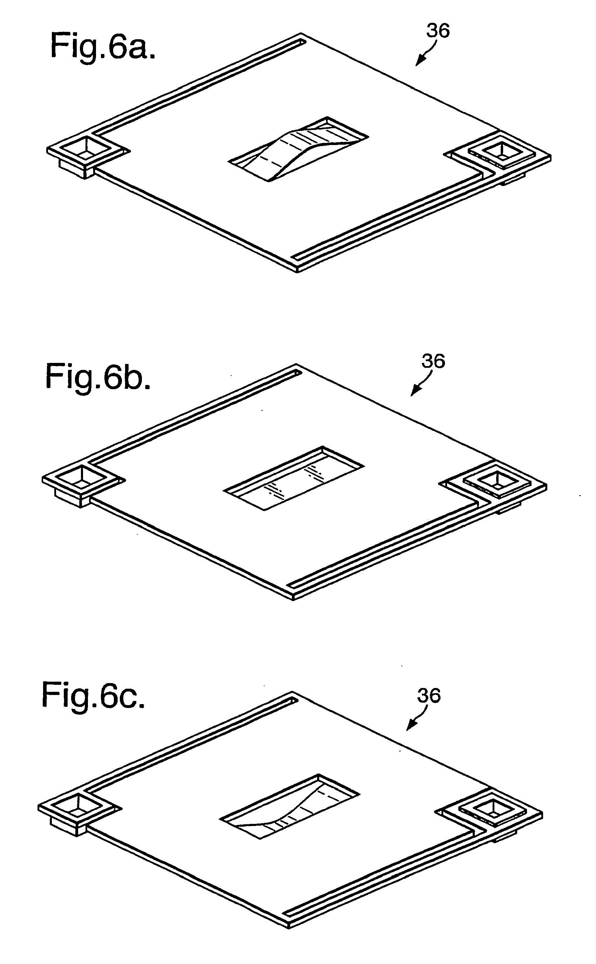

Referring to figure 6, three snapshot illustrations of the resonator beam 36 during the oscillation process are shown. In figure 6a, the resonator element is fully deflected upwards, in figure 6b the resonator beam is in a central position, whilst figure 6c shows the resonator beam fully deflected downwards.

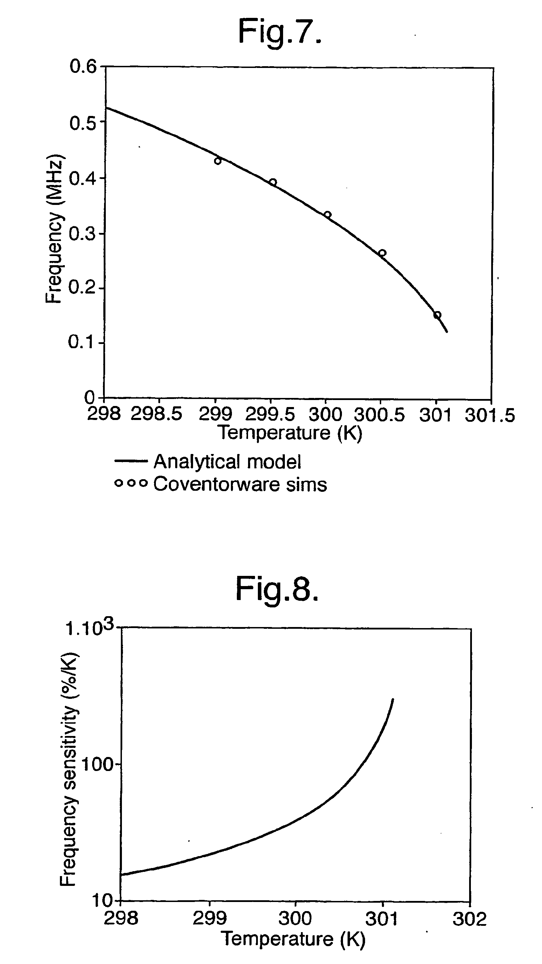

In figure 7, the calculated resonant frequency of the resonator beam of a device described with reference to figure 3 is shown. Results from both an analytical model of the device and a finite element simulation are shown. Referring to figure 8, the calculated frequency sensitivity as a function of temperature for the same device is also shown. It can be seen from figures 7 and 8 that the frequency sensitivity of a device of the present invention can be made very high.

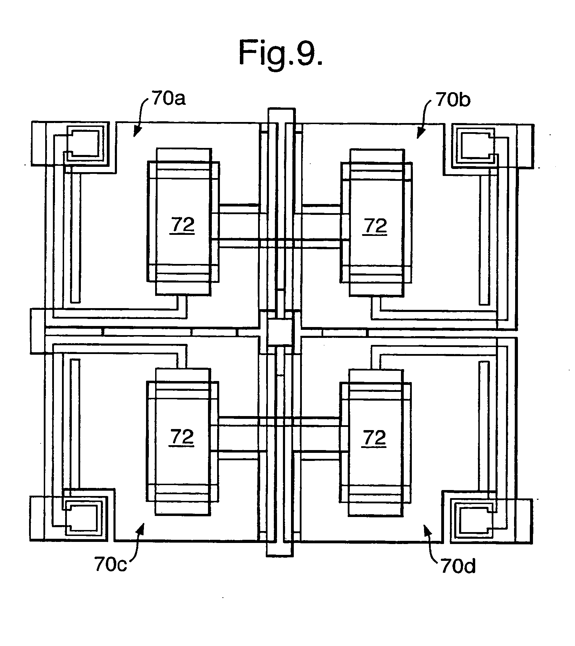

Referring to figure 9, a mask design for a two-by-two pixel array infra-red detector of the present invention is shown. The mask comprises four pixels 70a-70d (collectively referred to as pixels 70), each having a nitride resonator beam 72 formed on a layer of aluminium. Each pixel is around 50µm wide. It can be seen from this figure, how the present invention allows thermal imaging arrays of multiple pixels to be made.

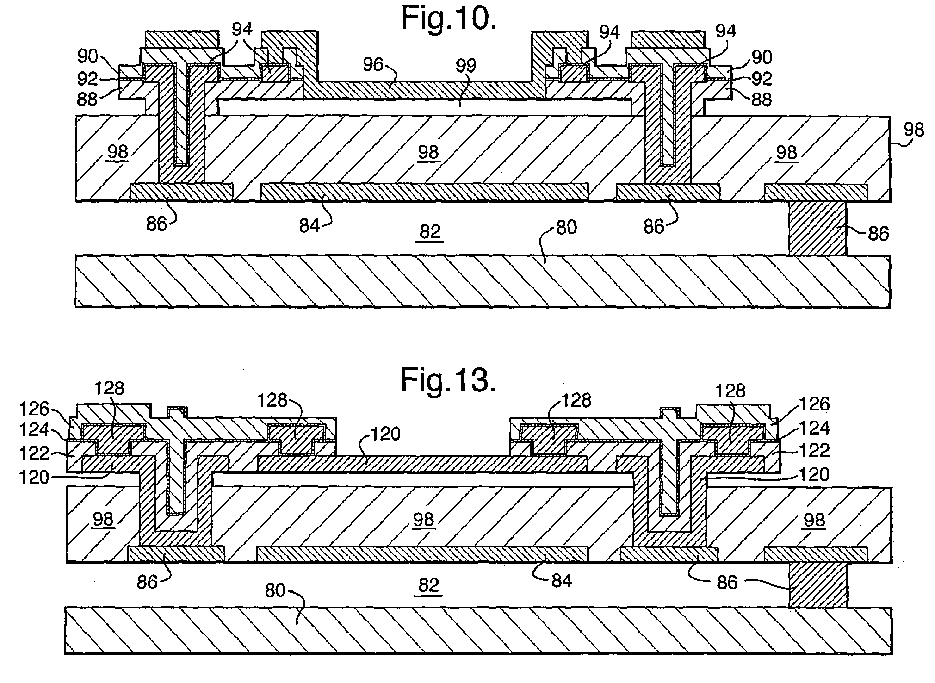

Referring to figures 10, a further device according to the present invention is illustrated. The device comprises a substrate 80, a silicon diode layer 82 and a layer of metal that forms a base electrode 84 and electrical interconnects 86. A first dielectric layer 88 and a second dielectric layer 90 are also provided and sandwich a thin metallic layer 92. A metal layer 94 is also deposited to provide electrical contact between the electrodes 86 and the thin metallic layer 92. A top layer of metal is used to form the resonator element 96.

The device of figure 10 also comprises a further nitride layer 98. The nitride layer 98 is located in the region between the resonator element 96 and the base electrode 84. A small air gap 99 is provided to ensure the resonator element is free to oscillate as required. The nitride layer 98 has a high optical refractive index and a high dielectric permittivity. The provision of the layer 98 increases the effective optical path length between the resonator element 96 and the base electrode 84 but decreases the effective electrical gap between the resonator element 96 and the base electrode 84. In this manner, the optical path length can be tuned for optimal absorption whilst minimising the effective electrical gap for maximum sensitivity.

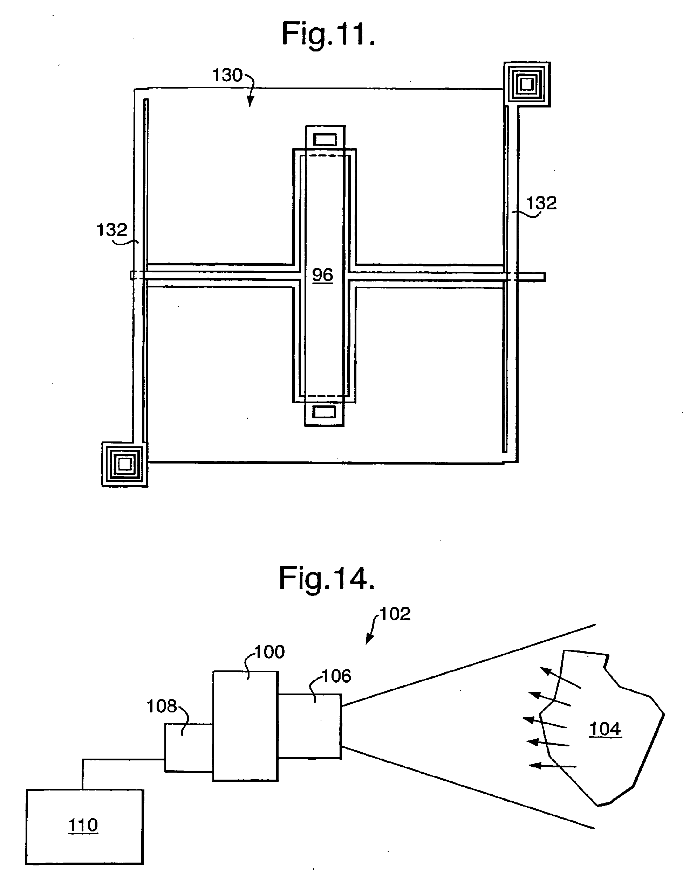

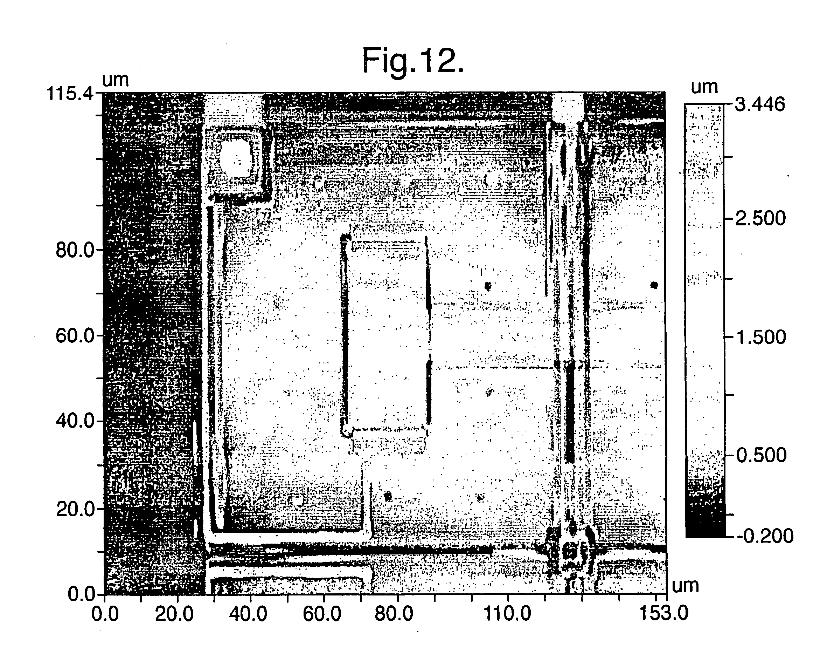

A plan view of a device of the type described with reference 10 is shown in figure 11. The device can be seen to comprise a resonator element 96 and a supporting frame 130 attached to a substrate via legs 132. The device, including the structure of the two legs 132, is symmetrical which prevents unwanted distortion of the device. An interferometric image of a device of this type is shown in figure 12.

A skilled person would appreciate that a device of the present invention could be fabricated in a number of different ways. For example, the devices described with reference to figures 4, 5, 10 and 11 comprise a suspended structure in which the metallic layer forming the resonator element is deposited as the last deposition step in the process. Referring to figure 13, a device is shown in which the metal layer 120 that forms the resonator element is deposited as the first layer when forming the suspended structure and also provides electrical connection to the electrical interconnects 86. A first dielectric layer 122, a thin metallic layer 124 and a second dielectric layer 126 are then deposited on the metal layer 120 along with metallic interconnect portions 128. A person skilled in the art would also be aware of numerous alternative fabrication processes that could be used to form a device of the present invention.

Figure 14 shows a thermal detector array 100 of the present invention incorporated into a thermal imaging camera 102 arranged to receive radiation from an object 104 in a scene. The device comprises infra-red optics 106 to collect thermal radiation from the scene and to direct such radiation to the detector array 100. Electronic processing equipment 108 and a monitor 110 are also provided. A skilled person would be well aware of the numerous ways in which optics and control electronics etc could be used to provide such a camera.

## Claims

1. A device or detecting infrared radiation comprising a resonator element (36) fixably attached to a supporting frame (32) at two or more points, the resonator element (36) having a mechanical resonance, and the device including means for measuring resonant properties of the resonator element the supporting frame (32) is mounted on a substrate (40) via a mounting means (43) **characterised in that** the supporting frame (32) is arranged to absorb infrared radiation received by the device thereby altering a resonant property of the resonator element, and wherein the mounting arrangement provides thermal isolation between the substrate (40) and the supporting frame (32).

2. A device according to claim 1 wherein the supporting frame (32) comprises a suspended portion spaced apart from the underlying substrate (40) of the device, the resonator element (36) being fixably attached to the suspended portion.

3. A device according to claim 2 wherein the suspended portion (32) is spaced apart from the underlying substrate (40) by a distance that is sufficient to form a resonant absorption structure for radiation having a wavelength within the infrared detection band of the device.

4. A device according to any of claims 2 to 3 wherein the suspended portion (32) is suspended from the underlying substrate (40) on at least one leg (43).

5. A device according to claim 4 wherein the at least one leg (43) comprises conductive malarial arranged to provide an electrical connection between the suspended portion and the underlying substrate (40).

6. A device according to any preceding claim wherein the supporting frame (32) comprises a layer of infrared absorbent material.

7. A according to any preceding claim wherein the resonator elements (36) and the supporting frame (32) have different coefficient of thermal expansion.

8. A device according to any preceding claim wherein the resonant frequency of the resonator element (36) is arranged to vary when infrared radiation is absorbed by the device.

9. A device according to any preceding claim and further comprising oscillation means to drive the resonator element (36) into resonance.

10. A device according to claim 9 wherein the oscillation means is arranged to electrostatically drive the resonator element (36).

11. A device according to any preceding claim wherein the resonator element (36) comprises an elongate flexible beam.

12. A device according to any preceding claim wherein the supporting frame (32) comprises a layer of material having an aperture (34) defined therein.

13. A device according to claim 12 when dependent on claim 11 wherein the elongate flexibly beam (36) is arranged to lie across the aperture (34) defined in the layer of material

14. A device according to any preceding claim wherein at least one of the supporting frame (32) and resonator element (36) comprise a shape memory alloy.

15. A device according to any preceding claim comprising a plurality of detection elements, each detection element comprising a resonator element (36) fixably attached to a supporting frame (32).

16. A device according to claim 15 wherein each detection element has an axis of symmetry.

17. A device according to any one of claims 15 to 16 wherein each detection element is arranged to output an electrical signal that is indicative of the resonant frequency of the associated resonator element (32).

18. A device according to any one of claims 15 to 17 wherein an array of detection elements is provided.

19. A device according to any preceding claim that is formed using a micro-fabrication process.

20. A device according to any preceding claim and further comprising readout electronics.

21. A device according to claim 20 wherein the supporting frame (32) and resonator element (36) are vertically integrated with the readout electronics.

22. A thermal imaging camera incorporating a device according to any preceding claim.

## Patentansprüche

1. Vorrichtung zur Erfassung von Infrarotstrahlung, die ein Resonatorelement (36) aufweist, das an einem Tragrahmen (32) an zwei oder mehr Punkten festlegbar angebracht ist, wobei das Resonatorelement (36) eine mechanische Resonanz besitzt und die Vorrichtung eine Einrichtung zur Messung von Resonanzeigenschaften des Resonatorelements aufweist und der Tragrahmen (32) über Befestigungsmittel (43) an einem Substrat (40) angebracht ist,
**dadurch gekennzeichnet, dass** der Tragrahmen (32) so ausgebildet ist, dass er durch die Vorrichtung empfangene Infrarotstrahlung absorbiert, wobei eine Resonanzeigenschaft des Resonatorelements geändert wird und wobei die Anbringungsanordnung eine thermische Isolation zwischen dem Substrat (40) und dem Tragrahmen (32) ergibt.

2. Vorrichtung nach Anspruch 1, bei welcher der Tragrahmen (32) einen aufgehängten Bereich aufweist, der von dem darunterliegenden Substrat (40) der Vorrichtung beabstandet ist, und das Resonatorelement (36) an dem aufgehängten Bereich fest angebracht ist.

3. Vorrichtung nach Anspruch 2, bei welcher der aufgehängte Bereich (32) von dem darunterliegenden Substrat (40) um einen Abstand beabstandet ist, der dazu ausreicht, eine Resonanzabsorptionsstruktur für Strahlung mit einer Wellenlänge im Infrarot-Erfassungsband der Vorrichtung zu erzeugen.

4. Vorrichtung nach Anspruch 2 oder 3, bei welcher der aufgehängte Bereich (32) auf mindestens einem Bein (43) vom darunterliegenden Substrat (40) beabstandet aufgehängt ist.

5. Vorrichtung nach Anspruch 4, bei der das mindestens eine Bein (43) ein leitfähiges Material aufweist, das eine elektrische Verbindung zwischen dem aufgehängten Bereich und dem darunterliegenden Substrat (40) ergibt.

6. Vorrichtung nach einem der vorhergehenden Ansprüche, bei welcher der Tragrahmen (32) eine Schicht aus einem Infrarot absorbierenden Material aufweist.

7. Vorrichtung nach einem der vorhergehenden Ansprüche, bei der das Resonatorelement (36) und der Tragrahmen (32) unterschiedliche thermische Ausdehnungskoeffizienten besitzen.

8. Vorrichtung nach einem der vorhergehenden Ansprüche, bei der sich die Resonanzfrequenz des Resonatorelements (36) ändert, wenn Infrarotstrahlung durch die Vorrichtung absorbiert wird.

9. Vorrichtung nach einem der vorhergehenden Ansprüche, die ferner eine Schwingungseinrichtung aufweist, die das Resonatorelement (36) in Resonanz bringt.

10. Vorrichtung nach Anspruch 9, bei der die Schwingungseinrichtung so ausgebildet ist, dass sie das Resonatorelement (36) elektrostatisch ansteuert.

11. Vorrichtung nach einem der vorhergehenden Ansprüche, bei der das Resonatorelement (36) ein länglicher, flexibler Träger ist.

12. Vorrichtung nach einem der vorhergehenden Ansprüche, bei welcher der Tragrahmen (32) eine Schicht aus einem Material aufweist, die eine darin vorgegebene Öffnung (34) besitzt.

13. Vorrichtung nach Anspruch 12 in Abhängigkeit von Anspruch 11, bei welcher der längliche, flexible Träger (36) so angeordnet ist, dass er über der in der Schicht des Materials vorgegebenen Öffnung (34) liegt.

14. Vorrichtung nach einem der vorhergehenden Ansprüche, bei welcher der Tragrahmen (32) und/oder das Resonatorelement (36) aus einer Legierung mit Formgedächtnis bestehen.

15. Vorrichtung nach einem der vorhergehenden Ansprüche, die mehrere Erfassungselemente aufweist, wobei jedes Erfassungselement ein Resonatorelement (36) umfasst, das an einem Tragrahmen (32) festlegbar angebracht ist.

16. Vorrichtung nach Anspruch 15, bei der jedes Erfassungselement eine Symmetrieachse besitzt.

17. Vorrichtung nach Anspruch 15 oder 16, bei dem jedes Erfassungselement ein elektrisches Signal abgibt, das die Resonanzfrequenz des zugeordneten Resonatorelements (32) anzeigt.

18. Vorrichtung nach einem der Ansprüche 15 bis 17, bei dem eine Anordnung von Erfassungselementen vorgesehen ist.

19. Vorrichtung nach einem der vorhergehenden Ansprüche, die unter Anwendung eines Mikrofabrikationsverfahrens hergestellt ist.

20. Vorrichtung nach einem der vorhergehenden Ansprüche, die ferner eine Ausleseelektronik aufweist.

21. Vorrichtung nach Anspruch 20, bei welcher der Tragrahmen (32) und das Resonatorelement (36) mit der Ausleseelektronik vertikal integriert sind.

22. Wärmebildkamera, die eine Vorrichtung nach einem der vorhergehenden Ansprüche aufweist.

## Revendications

1. Dispositif pour détecter un rayonnement infrarouge comprenant un élément de résonateur (36) attaché de manière fixe à un cadre de support (32) à deux points ou plus, l'élément de résonateur (36) ayant une résonance mécanique, et le dispositif comprenant des moyens pour mesurer des propriétés résonnantes de l'élément de résonateur, le cadre de support (32) est monté sur un substrat (40) par l'intermédiaire d'un moyen de montage (43), **caractérisé en ce que** le cadre de support (32) est agencé pour absorber un rayonnement infrarouge reçu par le dispositif en altérant de ce fait une propriété résonnante de l'élément de résonateur, et dans lequel l'agencement de montage assure une isolation thermique entre le substrat (40) et le cadre de support (32).

2. Dispositif selon la revendication 1, dans lequel le cadre de support (32) comprend une partie suspendue espacée du substrat sous-jacent (40) du dispositif, l'élément de résonateur (36) étant attaché de manière fixe à la partie suspendue.

3. Dispositif selon la revendication 2, dans lequel la partie suspendue (32) est espacée du substrat sous-jacent (40) d'une distance qui est suffisante pour former une structure d'absorption résonnante pour un rayonnement ayant une longueur d'onde à l'intérieur de la bande de détection infrarouge du dispositif.

4. Dispositif selon l'une quelconque des revendications 2 à 3, dans lequel la partie suspendue (32) est suspendue à partir du substrat sous-jacent (40) sur au moins une jambe (43).

5. Dispositif selon la revendication 4, dans lequel l'au moins une jambe (43) comprend un matériau conducteur agencé pour fournir une connexion électrique entre la partie suspendue et le substrat sous-jacent (40).

6. Dispositif selon l'une quelconque des revendications précédentes, dans lequel le cadre de support (32) comprend une couche de matériau absorbant les infrarouges.

7. Dispositif selon l'une quelconque des revendications précédentes, dans lequel l'élément de résonateur (36) et le cadre de support (32) ont des coefficients différents d'expansion thermique.

8. Dispositif selon l'une quelconque des revendications précédentes, dans lequel la fréquence résonnante de l'élément de résonateur (36) est agencée pour varier lorsque le rayonnement infrarouge est absorbé par le dispositif.

9. Dispositif selon l'une quelconque des revendications précédentes et comprenant en outre des moyens d'oscillation pour entraîner l'élément de résonateur (36) en résonance.

10. Dispositif selon la revendication 9, dans lequel les moyens d'oscillation sont agencés pour entraîner de manière électrostatique l'élément de résonateur (36).

11. Dispositif selon l'une quelconque des revendications précédentes, dans lequel l'élément de résonateur (36) comprend une poutre flexible allongée.

12. Dispositif selon l'une quelconque des revendications précédentes, dans lequel le cadre de support (32) comprend une couche de matériau ayant une ouverture (34) définie à l'intérieur de celle-ci.

13. Dispositif selon la revendication 12 lorsqu'elle est dépendante de la revendication 11, dans lequel la poutre flexible allongée (36) est agencée pour reposer à travers l'ouverture (34) définie dans la couche de matériau.

14. Dispositif selon l'une quelconque des revendications précédentes, dans lequel au moins l'un du cadre de support (32) et de l'élément de résonateur (36) comprend un alliage de mémoire de forme.

15. Dispositif selon l'une quelconque des revendications précédentes, comprenant une pluralité d'éléments de détection, chaque élément de détection comprenant un élément de résonateur (36) attaché de manière fixe à un cadre de support (32).

16. Dispositif selon la revendication 15, dans lequel chaque élément de détection a un axe de symétrie.

17. Dispositif selon l'une quelconque des revendications 15 à 16, dans lequel chaque élément de détection est agencé pour délivrer un signal électrique qui est indicatif de la fréquence résonnante de l'élément de résonateur associé (32).

18. Dispositif selon l'une quelconque des revendications 15 à 17, dans lequel un réseau d'éléments de détection est fourni.

19. Dispositif selon l'une quelconque des revendications précédentes, qui est formé en utilisant un processus de micro-fabrication.

20. Dispositif selon l'une quelconque des revendications précédentes et comprenant en outre des composants électroniques de lecture.

21. Dispositif selon la revendication 20, dans lequel le cadre de support (32) et l'élément de résonateur (36) sont intégrés verticalement aux composants électroniques de lecture.

22. Caméra d'imagerie thermique incorporant un dispositif selon l'une quelconque des revendications précédentes.
